Europäisches Patentamt

European Patent Office

Office européen des brevets

(11) Veröffentlichungsnummer : **0 019 108**
**B1**

(12) **EUROPÄISCHE PATENTSCHRIFT**

(45) Veröffentlichungstag der Patentschrift :
07.12.83

(51) Int. Cl.³ : **A 01 K 7/06**

(21) Anmeldenummer : **80102169.2**

(22) Anmeldetag : **23.04.80**

(54) **Selbsttränkevorrichtung als Tränkzapfen für Haustiere.**

(30) Priorität : **09.05.79 DE 2918661**

(43) Veröffentlichungstag der Anmeldung :
**26.11.80 Patentblatt 80/24**

(45) Bekanntmachung des Hinweises auf die Patenterteilung : **07.12.83 Patentblatt 83/49**

(84) Benannte Vertragsstaaten :
**AT CH FR GB LI NL SE**

(56) Entgegenhaltungen :
**CH-A- 461 170**
**CH-A- 500 656**
**DE-A- 1 809 092**
**DE-B- 2 632 734**
**DE-C- 941 877**
**FR-A- 2 098 656**
**FR-A- 2 123 327**

(73) Patentinhaber : **Aratowerk Walter von Taschitzki**
**Alte Forststrasse 55**
**D-5000 Köln 91 (DE)**

(72) Erfinder : **von Taschitzki, Rainer**
**Alte Forststrasse 53**
**D-5000 Köln 91 (DE)**

(74) Vertreter : **Schönwald, Karl, Dr.-Ing. et al**
**Deichmannhaus**
**D-5000 Köln 1 (DE)**

## Selbsttränkevorrichtung als Tränkzapfen für Haustiere

Die Erfindung bezieht sich auf eine Selbsttränkevorrichtung als Tränkzapfen für Haustiere, insbesondere für Schweine, mit einem in einem zapfenartigen Ventilgehäuse unter Federdruck selbsttätig gegen einen Ventilsitz schließenden Ventilstößel und mit einem auf den freien Teil des Stößels einwirkenden, am Ventilgehäuse angebrachten, durch Zubeißen des Tieres bewegbaren Betätigungshebel, wobei ein einen Ventilsitzkörper aufweisender Stopfen als selbstständiges Schraubstück ausgebildet ist und ein Gewindeteil größeren Durchmessers aufweist.

Eine solche Selbsttränkevorrichtung als Tränkzapfen für Haustiere ist durch die CH-A-461 170 bekannt. Hierbei dient das ventilseitige Ende des durch den Kniehebel zu betätigenden Ventilstößels als Aufnahme des Dichtungskörpers, der durch den Federdruck gegen den Ventilsitz den Wasserstrom absperrt. Die Justierung der Ventileinrichtung erfolgt durch eine Schraubmutter am Ende des Stößels, welche zugleich das Widerlager für den Kniehebel bildet und durch eine Kontermutter in der richtigen Position fixiert wird. Eine Justierung durch Veränderung der Einschraubposition des Ventilsitzes im Anschlußnippel ist nicht vorgesehen. Mit Hilfe einer Unterlegscheibe od. dgl. ist eine stufenlose Regulierung nicht möglich. Außerdem müßte das Gerät bei der Einstellung in zeitraubender Weise erneut auseinandergeschraubt werden. Bei der Anordnung des Ventilstößels ist es zwar hinsichtlich des Arbeitspunktes, an dem der Kniehebel am freien Ende des Ventilstößels angreift, vorteilhaft, wenn der Ventilstößel so gelagert ist, daß er um seine Achse rotieren kann, denn dadurch wird vermieden, daß sich der beim Angreifen des Hebelarms entstehende Verschleiß auf einen bestimmten Punkt konzentriert. Für den Dichtungskörper wäre es jedoch vorteilhaft, stets in der gleichen Position mit dem Ventilsitz zusammenzuwirken, weil sonst durch die Rotation ein Verschleiß an dem Dichtungskörper entsteht, welcher die Betriebssicherheit des Selbsttränkezapfens vermindern kann.

Der Erfindung liegt die Aufgabe zugrunde, bei einer Selbsttränkevorrichtung der anfangs genannten Art unter gleichzeitiger Vereinfachung eine Verbesserung der Justiermöglichkeit und der sich daraus ergebenden Abdichtprobleme zu schaffen. Die Erfindung zeichnet sich dadurch aus, daß der Stopfen auch einen zylindrischen Kolben aufweist, der in einer Bohrung des Ventilgehäuses gleitet, und daß der Ventilsitzkörper im Bereich des Ventilsitzes ein zu diesem nur axial verschiebbares, unverdrehbar gelagertes Zwischenstück trägt, welches den Dichtungskörper aufnimmt.

Durch eine solche Ausbildung der Selbsttränkevorrichtung ergibt sich, daß es nicht möglich ist, den Ventilstößel in einer bestimmten Position innerhalb des Gehäuses fixieren zu müssen. Die Einstellung der günstigsten Ventilverschlußposition kann durch Verstellen beim Einschrauben des den Ventilsitz tragenden Stopfens auf einfache Weise erfolgen, so daß sich eine Justierung der genauen Länge des Stößels und des Zusammenwirkens mit dem Hebel von selbst ergibt. Ferner können gegebenenfalls auftretende Fertigungstoleranzen bei der Länge des Stößels oder der Vorspannkraft der Feder leicht ausgeglichen werden. Durch das Einfügen des Zwischenstücks, welches den Dichtungskörper aufnimmt und ihn vor der Einwirkung des Drehimpulses schützt, den der rotierende Stößel sonst auf ihn ausüben würde, wird erreicht, daß kein Abrieb mehr zwischen Dichtungskörper und Ventilsitz erfolgen kann, so daß eine sehr gute Betriebssicherheit des Selbsttränkezapfens erzielt wird.

Vorteilhaft weist der Kolben des Stopfens eine Umfangsdichtung auf, die z. B. aus einem in einer Ringnut eingelagerten O-Ring besteht. Eine solche gleitfähige Abdichtung gestattet es, eine justierbare Ventileinrichtung zu bauen, ohne daß ein unerwünschter Nebenstrom auftreten kann.

Gemäß einem weiteren Merkmal der Erfindung ist der den Ventilsitz tragende Ventilsitzkörper als Mehrkant, z. B. Vierkant, ausgebildet. Das Zwischenstück besitzt hierbei soviele axiale Fortsätze, wie der Ventilsitzkörper Mehrkantflächen hat, wobei die axialen Fortsätze längs der Flächen des Mehrkants verlaufen und auf diese aufgeschoben werden können. Der Dichtungskörper bleibt dadurch stets in der gleichen Position gegenüber dem Ventilsitz fixiert, so daß jeglicher Abrieb vermieden und die Standzeit des Dichtungskörpers erheblich verlängert wird. Zweckmäßig läuft der Ventilkörper an seiner Stirnfläche in einen gerundeten Ventilsitz aus.

Zur sicheren Führung des Ventilstößels und zur Vermeidung einer Verkantung des Stößels an dem Zwischenstück kann der Ventilstößel gemäß einem weiteren Merkmal der Erfindung mit einem in der Bohrung des Ventilgehäuses gleitenden zylindrischen Schaftteil versehen werden. Auch dadurch lassen sich die Toleranzen der beweglichen Teile in engen Grenzen halten. Zweckmäßig dient der zylindrische Schaftteil zugleich als Widerlager für eine sich am Ventilgehäuse abstützende Feder.

Zur betriebssicheren Funktion des Tränkezapfens ist eine einwandfreie Verstellung des Ventilstößels erforderlich. Da die Tiere zum Öffnen des Ventiles auf den Kniehebel beißen müssen, können besonders bei ausgewachsenen Tieren durch die sehr kräftig ausgebildete Kaumuskulatur sehr starke Kräfte auf die Hebellagerung ausgeübt werden. Damit sich diese Kräfte auf eine größtmögliche Fläche verteilen können, sieht die Erfindung vor, daß der auf das freie Ende des Ventilstößels einwirkende Kniehebel auf einem Gewindebolzen gelagert wird, dessen beide Enden als ungleich dicke Lagerzapfen ausgebildet sind, sowie dementsprechend ungleich große Lageraugen in den beiden Schenkeln des Kniehebels. Dadurch wird vorteilhafterweise erreicht, daß die miteinander verschraubten Gewinde des Bolzens und des diesen aufnehmenden Zapfenendes auf ihrer vollen Länge tragen können.

Die Erfindung wird anhand einer in der Zeichnung dargestellten Ausführungsform nachstehend erläutert.

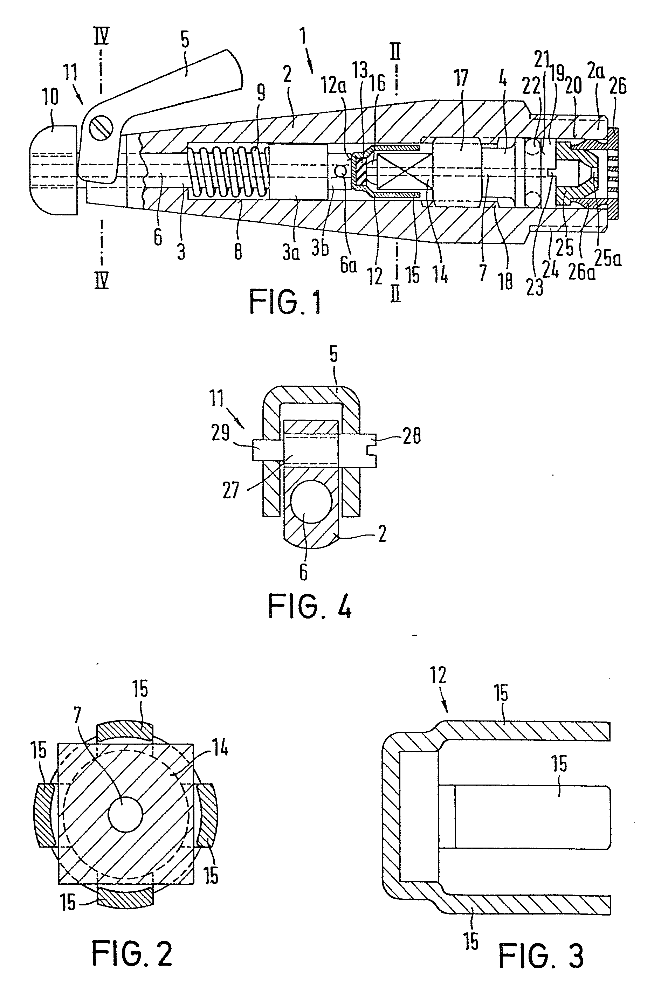

Figur 1 zeigt eine bevorzugte Ausführungsform eines Selbsttränkezapfens gemäß der Erfindung im Längsschnitt, schematisch.

Figur 2 ist ein Querschnitt nach der Linie II-II der Fig. 1 und stellt das Zusammengreifen von Ventilsitzkörper und Ventilkorb dar.

Figur 3 veranschaulicht den Ventilkorb als Einzelteil im Längsschnitt und im Schema.

Figur 4 ist ein Schnitt nach der Linie IV-IV der Fig. 1 und zeigt die Lagerung des Betätigungshebels am Ventilgehäuse.

Der Tränkezapfen 1 weist ein zapfenartiges Ventilgehäuse 2, einen Ventilstößel 3, einen Stopfen 4 mit Ventilsitzkörper und einen Betätigungshebel 5 auf. Der Ventilstößel 3 und der Stopfen 4 sind mit Längsbohrungen 6 und 7 zum Zuleiten des Tränkwassers zu dem Kopfstück des Selbsttränkezapfens versehen. Der Ventilstößel 3 weist einen Zylinderteil 3a auf, der in einer Bohrung 8 des Ventilgehäuses 2 gleitet und zugleich als Widerlager für eine Feder 9 dient, deren anderes Ende sich an dem Ventilgehäuse 2 abstützt. Der aus dem Ventilgehäuse 2 herausragende Teil des Ventilstößels 3 ist mit einer Endmutter 10 versehen. Gegen diese liegt der kurze Schenkel des als Kniehebel ausgebildeten Betätigungshebels 5 an, der bei 11 an dem Ventilgehäuse 2 gelagert ist.

Die Ventileinrichtung ist in der Weise ausgebildet, daß zwischen dem Ventilsitzkörper 14 und dem Ventilstößel 3 ein Zwischenstück 12 eingefügt ist, das ein selbständiges Teil darstellt und gegenüber dem Ventilsitzkörper 14 unverdrehbar gelagert ist. Das Zwischenstück 12 hat die Form eines Körbchens und nimmt auf seiner dem Ventilsitzkörper zugekehrten Seite einen Dichtungskörper 13 aus elastischem Material auf. Die freie Endfläche 12a des Zwischenstücks 12 liegt an der Stirnfläche des abgesetzten Teils 3b des Ventilstößels 3 an, so daß der Ventilstößel 3 nur seinen Schub, nicht aber seinen Drehimpuls, auf das Zwischenstück 12 übertragen kann.

Der Ventilsitzkörper 14 ist als Mehrkant ausgebildet, der mit dem Zwischenstück 12 in der Weise zusammenwirkt, daß an dem Zwischenstück 12 angebrachte Fortsätze 15 auf den Flächen des Mehrkantes aufgeschoben sind und an diesen anliegen. Dadurch kann das Zwischenstück 12, welches eine korbähnliche Gestaltung aufweist, axial auf dem Mehrkant gleiten. Eine Rotationsbewegung des Ventilkorbes 12 ist jedoch verhindert.

Der Ventilsitzkörper 14 als Mehrkant ist zweckmäßig ein Vierkant. Man kann aber auch einen Dreikant oder einen Vielkant vorsehen. Der Mehrkant weist einen Ventilsitz 16 auf, der etwas abgerundet sein kann und mit seiner Stirnfläche an dem Dichtungskörper 13 zur Anlage kommt. Der Ventilstößel 3 ist an dem Teil 3b mit einer Querbohrung 6a versehen.

Der Stopfen 4 stellt ein selbständiges Schraubstück mit einem Gewindeteil 17 dar, das in das Gewinde 18 des Ventilgehäuses eingeschraubt ist. Weiterhin ist der Stopfen 4 mit einem Kolben 19 ausgerüstet, der mit der Bohrung 20 des Ventilgehäuses 2 zusammenwirkt. In einer Ringnut 21 des Kolbens 19 ist ein Dichtungsring 22 angeordnet, der den äußeren Umfang des Stopfens 4 gegenüber der Wandung der Bohrung 20 abdichtet, so daß sich da kein Nebenstrom ausbilden kann. Der Kolben 19 kann an der Stirnfläche mit einer Schraubenziehernut 23 versehen sein, so daß der Stopfen 4 in axialer Richtung in dem Ventilgehäuse 2 einreguliert werden kann, um Fertigungstoleranzen hinsichtlich der Länge des Ventilstößels 3 oder der Vorspannung der Feder 9 ausgleichen zu können. An dem freien Ende 2a des Ventilgehäuses 2 ist ein Anschlußschraubgewinde 24 vorgesehen. Weiterhin kann ein Düsenkörper 25 und ein Schmutzfilter 26 an der Eingangsseite des Ventilgehäuses 2 verwendet werden. Das Schmutzfilter 26 weist am Umfang eine wulstförmige Verdickung 26a auf, die gegen die Bohrung 20 des Ventilgehäuses 2 dichtend anliegt. Der Hülsenteil des Schmutzfilters 26 ist auf den Düsenkörper 25 klemmend aufschiebbar, so daß beide Teile 25 und 26 in einem festen Zusammenhang stehen. Durch die Größe der Düse 25a wird die Menge des zuströmenden Wassers geregelt. Der Düsenkörper 25 ist gegen einen anderen Düsenkörper mit kleinerer oder größerer Düsenöffnung leicht auswechselbar.

Zum Öffnen des Tränkezapfens 1 nimmt das trinkende Tier das zapfenartige Gehäuse 2 unmittelbar und so weit wie möglich in das Maul hinein, um mit den Zähnen oder dem Gaumen das freie Ende des Betätigungshebels 5 leicht bewegen zu können. Hierbei wird der Ventilstößel 3 mit der Endmutter 10 durch Vorschieben mittels des kurzen Schenkels des Betätigungshebels 5 von dem Zwischenstück 12 abgezogen. Der durch die Bohrung 7 des Stopfens 4 wirksam werdende Wasserstrom, der unter dem Druck des Wasserleitungsnetzes steht, schiebt das Zwischenstück 12 von dem Ventilsitz 16 ab, so daß das Wasser seitlich zwischen den Ansätzen weiterströmen und zu der Querbohrung 6a der Bohrung 6 des Ventilstößels 3 und von dort bis zum freien Ende und unmittelbar tief in den Rachen des Tieres gelangt. Nach Loslassen des Betätigungshebels 5 wird der Dichtungskörper 13 unter dem Druck der Feder 9 und des Stößels 3 an den Sitz 16 angepreßt, wobei jede mögliche Drehung des Ventilstößels 3 von dem axial geführten Zwischenstück 12 und der Dichtungsscheibe 13 ferngehalten wird. Für die betriebssichere Funktion des Betätigungshebels 5 dient ein abgestufter Gewindebolzen 27 als Lagerelement 11 für den Hebel 5. Der Gewindebolzen 27 hat einen Lagerzapfen 28 größeren Durch- messers und einen Lagerzapfen 29 kleineren Durchmessers, wobei in den Schenkeln des Betätigungshebels 5 entsprechend ungleich große Lageraugen vorgesehen sind. Durch ein solches Lagerelement ist die Gefahr des Lockerwerdens der Lagerachse beseitigt. Außerdem läßt sich das Lagerelement 11 schnell und sicher montieren. Zugleich wird erreicht, daß sich die auf das Hebellager einwirkenden Kräfte auf die ganze Länge des Schraubengewindes gleichmäßig verteilen.

## Ansprüche

1. Selbsttränkevorrichtung als Tränkzapfen für Haustiere, insbesondere für Schweine, mit einem in einem zapfenartigen Ventilgehäuse (2) unter Federdruck (9) selbsttätig gegen einen Ventilsitz schließenden Ventilstößel (3) und mit einem auf den freien Teil des Stößels einwirkenden, am Ventilgehäuse angebrachten, durch Zubeißen des Tieres bewegbaren Betätigungshebel (5), wobei ein einen Ventilsitzkörper (14) aufweisender Stopfen (4) als selbstständiges Schraubstück ausgebildet ist und ein Gewindeteil (17) größeren Durchmessers aufweist, dadurch gekennzeichnet, daß der Stopfen (4) auch einen zylindrischen Kolben (19) aufweist, der in einer Bohrung (20) des Ventilgehäuses (2) gleitet, und daß der Ventilsitzkörper (14) im Bereich des Ventilsitzes ein zu diesem nur axial verschiebbares, unverdrehbar gelagertes Zwischenstück (12) trägt, welches den Dichtungskörper (13) aufnimmt.

2. Selbsttränkevorrichtung nach Anspruch 1, dadurch gekennzeichnet, daß der Kolben (19) des Stopfens (4) mit einer Umfangsdichtung, z. B. einem in einer Ringnut (21) eingelagerten O-Ring (22), versehen ist.

3. Selbsttränkevorrichtung nach Anspruch 1, dadurch gekennzeichnet, daß der den Ventilsitz (16) tragende Ventilsitzkörper (14) als Mehrkant, z. B. Vierkant, ausgebildet ist, und daß das Zwischenstück (12) axiale Fortsätze (15) besitzt, die längs der Flächen des Mehrkantes verlaufen und auf diese aufschiebbar sind.

4. Selbsttränkevorrichtung nach Anspruch 1 oder 2, dadurch gekennzeichnet, daß der Ventilsitzkörper (14) an seiner Stirnfläche in einen gerundeten Ventilsitz (16) ausläuft.

5. Selbsttränkevorrichtung nach einem der Ansprüche 1 bis 4, dadurch gekennzeichnet, daß der mit einer am freien Ende aufgeschraubten Endmutter (10) versehene Ventilstößel (3) mit dem Betätigungshebel (5) zusammenwirkt, der auf einem Gewindebolzen (27) mit im Durchmesser abgestuften Zapfenteilen (28, 29) gelagert ist.

6. Selbsttränkevorrichtung nach einem der Ansprüche 1 bis 5, dadurch gekennzeichnet, daß der Ventilstößel (3) mit einem in der Bohrung des Ventilgehäuses (2) gleitenden zylindrischen Schaftteil (3a) versehen ist, der als Widerlager für die sich am Ventilgehäuse (2) abstützende Feder (9) dient.

## Claims

1. Automatically operable watering device in the form of a tap for domesticated animals, in particular for pigs, comprising a valve plunger (3) closing in a tap-like valve housing (1) automatically under spring action (9) against a valve seat and an actuation lever (5) acting on the free portion of the plunger and mounted at the valve housing, the lever being movable through animal biting, a stopper (4) having a valve seating body being designed as an independent screw element and having a thread portion of a larger diameter, characterized in that the stopper (4) also contains a cylindrical piston (19) sliding in a bore (20) of the valve housing (2) and that within the region of the valve seat, the valve seating body (14) carries a spacer (12) nonrotatingly supported and axially displaceable only in relation to the valve seating body, the spacer receiving the sealing member (13).

2. Automatically operable watering device according to claim 1, characterized in that the piston (19) of the stopper (4) is provided with a peripheral seal, e. g. an O-ring (22) disposed in an annular groove (21).

3. Automatically operable watering device according to claim 1, characterized in that the valve seating body (14) carrying the valve seat (16) is designed as a polygonal piece, e. g. a square and that the spacer (12) has axial extensions (15) which extend along the surfaces of the polygonal piece and can be pushed upon the latter.

4. Automatically operable watering device according to claims 1 or 2, characterized in that the valve seating body (14) ends at its front surface in a rounded-off valve seat (16).

5. Automatically operable watering device according to claims 1 to 4, characterized in that the valve plunger (3) provided at its free end with an end nut (10) screwed thereon is coacting with an actuation lever (5) which is supported on a threaded bolt (27) with journal elements (28, 29) stepped in diameter.

6. Automatically operable watering device according to one of the preceding claims 1 to 5, characterized in that the valve plunger (3) is provided with a cylindrical shaft portion (30) sliding in the bore of the valve housing (1) and serving as an abutment for the spring (9) supported at the valve housing (1).

## Revendications

1. Appareil d'abreuvement automatique réalisé sous la forme d'un téton d'abreuvement pour animaux domestiques, notamment pour des porcs, comprenant un poussoir de soupape (3) qui se ferme automatiquement contre un siège de soupape, sous la pression d'un ressort (9), dans un boîtier de soupape (2) en forme de téton, et un levier d'actionnement (5) qui agit sur la partie libre du poussoir, est monté sur le boîtier de soupape (2), et peut être manœuvré par la fermeture des mâchoires de l'animal, un bouchon (4) présentant un corps de siège de soupape (14) étant réalisé sous la forme d'une pièce filetée indépendante et présentant une partie filetée (17) de plus grand diamètre, caractérisé en ce que le bouchon (4) comporte également un piston cylindrique (19) qui coulisse dans un alésage (20) du boîtier de soupape (2) et en ce que le corps de siège de soupape (14) porte dans la région du siège de soupape une pièce intercalaire (12) qui est montée mobile en translation axiale mais bloquée en rotation par rapport à ce siège, et qui reçoit le corps d'étanchéité (13).

2. Appareil d'abreuvement automatique selon la revendication 1, caractérisé en ce que le piston (19) du bouchon (4) est muni d'une garniture d'étanchéité périphérique, par exemple d'une bague torique (22) montée dans une gorge annulaire (21).

3. Appareil d'abreuvement automatique selon la revendication 1, caractérisé en ce que le corps de siège de soupape (14) qui porte le siège de soupape (16) est un polygone, par exemple un carré, et en ce que la pièce intercalaire (12) possède des prolongements (15) qui s'étendent le long des facettes du polygone et peuvent s'emmancher sur celles-ci.

4. Appareil d'abreuvement automatique selon l'une des revendications 1 et 2, caractérisé en ce que le corps de siège de soupape (14) se termine, sur sa surface frontale, par un siège de soupape (16) arrondi.

5. Appareil d'abreuvement automatique selon l'une des revendications 1 à 4, caractérisé en ce que le poussoir de soupape (3) équipé d'un écrou d'extrémité (10) vissé sur son extrémité libre coopère avec le levier d'actionnement (5) qui est monté sur une tige filetée (27) possédant des tourillons (28, 29) échelonnés en diamètre.

6. Appareil d'abreuvement automatique selon l'une des revendications 1 à 5, caractérisé en ce que le poussoir de soupape (3) présente une partie cylindrique (3a) formant tige et coulissant dans l'alésage du boîtier (2) de la soupape, cette partie servant de butée pour le ressort (9) s'appuyant sur le boîtier (2) de la soupape.

FIG.1

FIG. 4

FIG. 2

FIG. 3